## Europäisches Patentamt
## European Patent Office
## Office européen des brevets

(11) Veröffentlichungsnummer: **0 012 927**
**B1**

(12) **EUROPÄISCHE PATENTSCHRIFT**

(45) Veröffentlichungstag der Patentschrift:
**01.12.82**

(21) Anmeldenummer: **79105095.8**

(22) Anmeldetag: **11.12.79**

(51) Int. Cl.³: **B 22 C 1/10**, B 22 C 1/22,
C 08 G 18/30, C 08 G 18/32

(54) Kalthärtendes Bindemittel für teilchenförmige Feststoffe, insbesondere Giessereisand.

(30) Priorität: **21.12.78 DE 2855391**

(43) Veröffentlichungstag der Anmeldung:
**09.07.80 Patentblatt 80/14**

(45) Bekanntmachung des Hinweises auf die Patenterteilung:
**01.12.82 Patentblatt 82/48**

(84) Benannte Vertragsstaaten:
**AT FR GB IT**

(56) Entgegenhaltungen:
**EP-A-0 002 898**
**DD-A- 105 817**
**DE-A-1 758 932**
**DE-A-2 348 226**
**DE-A-2 440 375**
**DE-A-2 749 973**
**DE-A-2 759 258**
**DE-A-2 759 262**
**US-A-3 905 934**

(73) Patentinhaber: **Woellner-Werke, Woellnerstrasse,
D-6700 Ludwigshafen/Rhein (DE)**

(72) Erfinder: **Lederer, Gernot, Verdistrasse 41,
D-6720 Speyer / Rhein (DE)**

(74) Vertreter: **Deufel, Paul, Dr. et al, Patentanwälte
Müller-Boré.Deufel Schön.Hertel Siebertstrasse 4,
D-8000 München 86 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Kalthärtendes Bindemittel für teilchenförmige Feststoffe, insbesondere Giessereisand**

Kalthärtende Bindemittel für teilchenförmige Feststoffe, insbesondere Giessereisand, sind bereits bekannt. Beispielsweise werden als derartige Bindemittel Gemische aus Polyhydroxyverbindungen und Polyisocyanaten verwendet (DE-OS-2 440 375), wobei jedoch die Härtung durch Einblasen von gasförmigen und leichtflüchtigen tertiären Aminen, vorzugsweise Triäthylamin und Diäthylamin, durchgeführt werden muss.

Mit den gleichen Härtungsmitteln werden Bindemittelgemische aus Polyisocyanaten und Phenol-Formaldehyd- oder Novolak-Harzen ausgehärtet (DE-B-1 583 521).

Die DE-A-1 920 759 beschreibt den Einsatz höhersiedender Amine bzw. basisch reagierender heterocyclischer Stickstoffverbindungen als Aushärtungsmittel für Bindemittelgemische der vorstehend beschriebenen Art.

Allen diesen bekannten selbsthärtenden Bindemitteln für Giessereisand ist der Nachteil gemeinsam, dass bei der Herstellung von Formen und Kernen aus diesem Sand zur Aushärtung eine dritte Härtungskomponente verwendet werden muss, die sich mit keiner der zwei Komponenten des Bindemittels verpacken lässt, so dass ein aus drei Verpackungen bestehendes System dem Verbraucher angeboten werden muss. Ausserdem sind die Härtungskomponenten übelriechende toxische Substanzen, welche die physiologischen Bedingungen am Arbeitsplatz in bedenklicher Weise beeinflussen.

Ferner treten beim Einsatz der vorstehend beschriebenen bekannten Systeme beim Abgiessen hohe Graphitisierungsgrade an der Grenzfläche zwischen Formstoffoberfläche und Flüssigmetall auf. Die zu beobachtende Glanzkohlenstoffbildung verhindert grösstenteils eine einwandfreie Haftung, wenn später eine Oberflächennachbehandlung, beispielsweise durch Lackieren oder Emaillierung, vorgenommen wird.

Ausserdem ist die Thermostabilität der bisher unter Einsatz der bekannten Bindemittel hergestellten Formstoffmischungen zur Herstellung von Giessereiformen und -kernen insofern unbefriedigend, als aufgrund einer gewissen Thermoplastizität beim Giessvorgang die Messgenauigkeit der produzierten Teile oft zu wünschen übrig lässt.

Die Erfindung hat sich daher die Aufgabe gestellt, ein kalthärtendes Bindemittel für teilchenförmige Feststoffe, insbesondere Giessereisand, zu schaffen, dem nicht mehr die vorstehend geschilderten Nachteile anhaften.

Diese Aufgabe wird gemäss Anspruch 1 gelöst.

Die erfindungsgemäss eingesetzten Polyole sind bekannt und auf dem Markt erhältlich, so dass ihre Herstellung nicht mehr erläutert werden muss. Sie lassen sich aus Äthylendiamin und seinen Oligomeren, wie Diäthylentriamin, Triäthylentetramin oder Tetraäthylenpentamin, oder Propylendiamin und seinen Oligomeren, beispielsweise Dipropylentriamin, Tripropylentetramin usw. oder Nitrilotriäthylendiamin, herstellen. Die erwähnten Amine werden in bekannter Weise mit Äthylenoxid, Propylenoxid bzw. 1,2-Butylenoxid ein- oder mehrfach umgesetzt. Vorzugsweise wird erfindungsgemäss ein Umsetzungsprodukt aus 1 Mol Äthylendiamin mit 5,7 oder 9 Mol Propylenoxid eingesetzt.

Vorzugsweise besitzen die erfindungsgemäss eingesetzten Polyole eine OH-Zahl von 100 bis 1800, insbesondere 200 bis 800. Die OH-Zahl wird in mg KOH pro g Substanz ausgedrückt.

Vorzugsweise ist das stickstoffbasische Polyol di- bis pentafunktionell, wobei Mischungen verschiedener stickstoffbasischer Polyole mit verschiedenen Funktionalitäten eingesetzt werden können.

Als Polyisocyanate kommen erfindungsgemäss alle an sich bekannten Polyisocyanate mit mindestens zwei Isocyanatgruppen in Frage. Geeignet sind beispielsweise Prepolymere, hergestellt durch partielle Umsetzung von Toluylendiisocyanat und Glykolen, wie Äthylenglykol, ferner aliphatische Isocyanate, wie Hexamethylendiisocyanat, alicyclische Polyisocyanate, wie 4,4-Dicyclohexylmethan-diisocyanat sowie aromatische Polyisocyanate, wie 3,4- und 2,6-Toluoldiisocyanat, Diphenylmethandiisocyanat, Naphthalin-1,5-diisocyanat, Triphenylmethantriisocyanat, Xyloldiisocyanat oder Methylderivate davon, Polymethylenpolyphenylisocyanat sowie dessen Methylderivate oder Chlorphenylen-2,4-diisocyanat.

Besonders geeignet ist das Diphenylmethandiisocyanat, das sowohl in reiner als auch in roher technischer Form eingesetzt werden kann.

Die erfindungsgemäss einsetzbaren Polyisocyanate sind ebenso wie die definierten Polyole im Handel unter diversen Warenzeichen erhältlich.

Das Mol-Verhältnis der Polyisocyanate zu den Polyolen beträgt 1 : 1, da es entscheidend ist, dass sämtliche Isocyanatgruppen abgeblockt bzw. durch chemische Reaktionen mit den Polyolen gebunden werden.

Gemäss einer weiteren bevorzugten Ausführungsform der Erfindung wird das stickstoffbasische Polyol in Mischung mit einem insbesondere di- bis pentafunktionellen stickstofffreien Polyol verwendet. Man kann auch Mischungen aus verschiedenen stickstoffbasischen mit verschiedenen stickstofffreien Polyolen einsetzen.

Die Erfindung beruht auf der überraschenden Erkenntnis, dass von den für die Umsetzung mit Polyisocyanaten bekannten Polyhydroxyverbindungen die stickstoffbasischen Polyole als Komponente kalthärtender Bindemittel für teilchenförmige Feststoffe, insbesondere Giessereisand, schnell ohne einen Katalysator reagieren. Im Falle der bekannten Verwendung von stickstofffreien Polyolen ist, wie eingangs dargelegt wurde, der Einsatz eines gasförmigen und leichtflüchtigen tertiären Amins als Katalysator erforderlich.

Da in an sich bekannter Weise die höherfunktionellen stickstoffbasischen Polyole schneller reagieren als die niedrigfunktionellen, kann man durch eine entsprechende Auswahl der Funktionalität dieser Verbindungen für die jeweiligen Verwendungszwecke angepasste kalthärtende Bindemittel für Giessereisand formulieren. Eine weitere Variationsmöglichkeit besteht noch durch die Mitverwendung der stickstofffreien Polyole, die im Gegensatz zu den «schnellen» stickstoffbasischen Polyolen als «langsame» Polyole zu bezeichnen sind und Abmischungen ermöglichen, die, je nach der Menge der stickstofffreien Polyole, entsprechend langsamer aushärten.

Die Erfindung beruht auf der weiteren Erkenntnis, dass zu einer weiteren Erhöhung der Aushärtungsgeschwindigkeit, die jedoch an sich ausreichend ist, neue Katalysatoren verwendet werden können, die aus Alkali- oder Erdalkaliacetaten bestehen. Besonders geeignet ist Kaliumacetat, man kann jedoch auch auf Natriumacetat oder Calciumacetat mit Vorteil zurückgreifen. Beispielsweise wird Kaliumacetat in einem Glykol, wie Äthylenglykol, Diäthylenglykol, Triäthylenglykol, Äthylendiglykol oder Propylenglykol, verwendet. Ferner kann man das Kaliumacetat in Glycerin auflösen. Diäthylenglykol wird am zweckmässigsten eingesetzt. Calciumacetat lässt sich 10%ig in Äthylenglykol lösen, desgleichen Natriumacetat. Die Lösungen dieser als Katalysatoren wirkenden Acetate werden der Polyolkomponente zugesetzt, so dass erfindungsgemässe Bindemittel auch bei Verwendung eines Katalysators in Form eines Zwei-Komponenten-Systems formuliert ist. Sämtliche bisher bekannten vorstehend beschriebenen Systeme mussten in drei getrennten Verpackungen angeboten werden.

Die Acetate werden dem Bindemittel vorzugsweise in Mengen von 0,1 bis 10 Gew.-% und insbesondere 0,2 bis 5 Gew.-%, bezogen auf das Bindemittel, zugesetzt.

Die erfindungsgemäss als Katalysatoren einsetzbaren Alkali- und Erdalkaliacetate besitzen eine so gute katalytische Wirkung, dass sie sogar die Reaktion der Polyisocyanate mit den stickstofffreien Polyolen zu katalysieren vermögen. Es ist daher möglich, dass in dem Bindemittel vorliegende stickstoffbasische Polyol grösstenteils oder vollständig durch ein oder mehrere stickstofffreie Polyole zu ersetzen.

Der Einsatz der vorstehend beschriebenen Katalysatoren ermöglicht eine weitere Variationsmöglichkeit zur Einstellung der Aushärtungsgeschwindigkeit der erfindungsgemässen kalthärtenden Bindemittel. Neben der bereits erwähnten Kombinationsmöglichkeit eines «langsamen» Polyols (stickstofffreies Polyol) mit einem «schnellen» Polyol (stickstoffbasisches Polyol), wobei das letztere die Reaktion des ersteren mit dem Polyisocyanat beschleunigt, kann durch den Einsatz eines Katalysators auch ein «langsames» Polyol beschleunigt werden. Auch eine Dreierkombination aus einem «langsamen» Polyol, «schnellen» Polyol sowie einem Alkali- oder Erdalkaliacetat als Katalysator ist möglich. Durch eine entsprechende Auswahl aus diesen Möglichkeiten, wobei noch die Funktionalitäten zu berücksichtigen sind, lassen sich für die jeweiligen Zwecke massgeschneiderte kalthärtende Bindemittel herstellen, deren Aushärtungszeiten von 1 Minute bis 2 Stunden und darüber schwanken können.

Vorzugsweise liegen die mittleren Molekulargewichte der erfindungsgemäss eingesetzten Polyole (unabhängig von der Reaktivität) zwischen 290 und 620.

Die Herstellung der stickstofffreien Polyole ist an sich bekannt. Sie können durch Umsetzung von Diolen, Triolen, Tetrolen oder zuckerartigen Polyhydroxyverbindungen mit 1,2-Alkylenoxiden in Gegenwart eines basischen Katalysators, wie Natriumhydroxid oder Kaliumhydroxid, drucklos oder unter Druck hergestellt werden.

Durch die Erfindung wird daher auch ein ohne Katalysator kalthärtendes Bindemittel für teilchenförmige Feststoffe, insbesondere Giessereisand, zur Verfügung gestellt, das im Gegensatz zu den bisher bekannten Systemen, die unbedingt eines Härters bedurften, in Form von Zwei-Komponenten-Systemen dem Verbraucher angeboten werden kann. Dies ist auch dann der Fall, wenn gegebenenfalls ein Alkali- oder Erdalkaliacetat, wie Kaliumacetat, als Härter verwendet wird, da diese Katalysatorkomponente der Polyolkomponente zugemischt werden kann. Ferner bedingen die Alkali- oder Erdalkaliacetate als geruchsfreie und nichttoxische Substanzen keine physiologischen Beeinträchtigungen des Arbeitsplatzes.

Zur Verbesserung der Haftung zwischen Bindemittel und dem zur Herstellung von Giessereiformen und -kernen verwendeten feinkörnigen Material, beispielsweise Quarzsand, Zirkonsand, Olivinsand usw., kann dem erfindungsgemässen Bindemittel ein organofunktionelles Silan in einer Menge von vorzugsweise 0,05 bis 1 Gew.-%, bezogen auf das Bindemittel, zugemischt werden. Geeignete Silanverbindungen sind beispielsweise γ-Aminopropyl-triäthoxysilan, γ-Methacryloxypropyl-trimethoxysilan sowie γ-Glycidyl-oxypropyl-trimethoxysilan.

Gelegentlich erleichtern organische Lösungsmittel, welche die Viskosität der Bindemittel herabsetzen, die einheitliche Verteilung derselben auf den teilchenförmigen Feststoffen, beispielsweise Quarzsandteilchen. Geeignete Lösungsmittel sind beispielsweise aromatische Lösungsmittel, wie Toluol, Xylol, Äthylbenzol oder Naphthalin, ferner Lösungsmittel des Äther- und Estertyps, wie beispielsweise Diglykoldimethyläther, Methyldiglykol, Äthyldiglykol, Äthylendiglykol, Äthylglykolacetat, Glycerin und Glycerinester, technische Gemische aus Äthylenglykolacetaten, Furfurylalkohol oder Diacetonalkohol. Ferner kann man auch als viskositätsverminderndes Mittel ein Polyol auf der Basis von Polypropylenglykol mit einer OH-Zahl von 235 bis 265, einer Viskosität von 50 mPa.s, einer Dichte von 1,01 g/cm³ und einem Stockpunkt von − 38 °C sowie einer Säurezahl von 0,01 verwenden.

Zur Herstellung einer Giessereiformstoffmischung wird beispielsweise getrockneter Quarzsand mit dem Bindemittel in einer Menge von weniger als 6 Gew.-%, insbesondere 0,3 bis 3 Gew.-%, bezogen auf die Gesamtmischung, vermischt. Die Mischung kann auch andere Bestandteile, wie Eisenoxid, Koksmehl, Holzmehl, Pech, Bitumen, Schamotte und/oder andere feuerfeste Stoffe in feinteiliger Form enthalten.

Die erhaltene Formstoffmischung wird dann in die gewünschte Form eingebracht und nach bekannten Verfahren verdichtet. Die Aushärtung erfolgt durch Stehenlassen bei Raumtemperatur, wobei die Härtungsgeschwindigkeit durch eine entsprechende Auswahl der einzelnen Komponenten, gegebenenfalls durch Zusatz eines Alkaliacetats als Härtungskatalysator, modifiziert werden kann.

Die unter Einsatz der erfindungsgemässen Bindemittel hergestellten Gussteile besitzen ein gutes Oberflächenhaftvermögen für Lackierungs- und Emailleschichten.

Die folgenden Beispiele erläutern die Erfindung. Alle Teilangaben sind Gewichtsteile und alle Prozentangaben Gewichtsprozente, sofern nichts anderes angegeben ist.

### Beispiel 1
Härterlösung
53,8% aliphatisches, höherfunktionelles, stickstofffreies Polyol mit einer OH-Zahl von 380 bis 420, einer Viskosität bei 25 °C von 5000 mPa.s, einer Dichte von 1,09 g/cm³, einem Stockpunkt von − 6 °C und einer Säurezahl (mg KOH/g von 0,006) (Polyol I)
23,1% stickstoffbasisches, aliphatisches, tetrafunktionelles, hochreaktives Polyol (OH-Zahl 460 bis 500, Viskosität bei 25 °C 4100 mPa.s, Dichte 1,02, Stockpunkt − 12 °C) (Polyol II)
23,1% technisches Lösungsmittelgemisch aus Äthylenglykolacetaten, Siedegrenzen 185 bis 195 °C

Formstoffmischung
100,0% Quarzsand H 32
   0,7% obiger Härterlösung
   0,7% Diphenylmethandiisocyanat, roh, technisch
Aushärtezeit zur Entnahme aus der Form: 18 bis 20 Minuten

### Beispiel 2
Härterlösung
40,0% Polyol I
40,0% Polyol II
20,0% Methyldiglykol

Formstoffmischung
100,0% Quarzsand H 32
   0,9% obiger Härterlösung
   0,9% Diphenylmethandiisocyanat, roh, technisch

Aushärtezeit zur Entnahme aus der Form: ca. 5 Minuten

### Beispiel 3
Härterlösung
90,0% Polyol I
10,0% einer 25%igen Kaliumacetatlösung in Äthylendiglykol

Formstoffmischung
100,0% Quarzsand H 32
   1,0% obiger Härterlösung
   1,0% Diphenylmethandiisocyanat, roh, technisch
Aushärtezeit zur Entnahme aus der Form: ca. 6 bis 9 Minuten

### Beispiel 4
Härterlösung
39,8% Polyol I
39,8% Polyol II
20,0% Äthylendiglykol
   0,4% Kaliumacetat

Formstoffmischung
100,0% Quarzsand H 32
   0,9% obiger Härterlösung
   0,9% Diphenylmethandiisocyanat, roh, technisch
Aushärtezeit zur Entnahme aus der Form: ca. 9 bis 11 Minuten

**Patentansprüche**

1. Kalthärtendes Bindemittel für teilchenförmige Feststoffe, insbesondere Giessereisand, auf der Grundlage einer Mischung aus einer Polyhydroxyverbindung und einem Polyisocyanat, dadurch gekennzeichnet, dass die Polyhydroxyverbindung wenigstens teilweise aus einem stickstoffbasischen Polyol besteht.

2. Bindemittel nach Anspruch 1, dadurch gekennzeichnet, dass das stickstoffbasische Polyol eine OH-Zahl von 100 bis 1800, insbesondere 200 bis 800, besitzt.

3. Bindemittel nach den Ansprüchen 1 bis 2, dadurch gekennzeichnet, dass das stickstoffbasische Polyol höherfunktionell ist.

4. Bindemittel nach den Ansprüchen 1 bis 3, dadurch gekennzeichnet, dass das stickstoffbasische Polyol di- bis pentafunktionell ist.

5. Bindemittel nach den Ansprüchen 1 bis 4, dadurch gekennzeichnet, dass das stickstoffbasische Polyol in Mischung mit einem di- bis pentafunktionellen stickstofffreien Polyol vorliegt.

6. Bindemittel nach den Ansprüchen 1 bis 5, dadurch gekennzeichnet, dass es als Härtungsbeschleuniger ein Alkali- oder Erdalkaliacetat, insbesondere Kaliumacetat, enthält.

7. Bindemittel nach den Ansprüchen 1 bis 6, dadurch gekennzeichnet, dass es ein organofunktionelles Silan enthält.

8. Bindemittel nach den Ansprüchen 1 bis 7, dadurch gekennzeichnet, dass es ein Lösungsmittel enthält.

**Claims**

1. A cold-setting binder for particulate solids, in particular foundry sand, based on a mixture of a polyhydroxy compound and a polyisocyanate, characterized in that the polyhydroxy compound consists at least in part of a nitrogen base polyol.

2. A binder according to claim 1, characterized in that the nitrogen base polyol has an OH number of 100 to 1800, in particular 200 to 800.

3. A binder according to claims 1 to 2, characterized in that the nitrogen base polyol is higher functional.

4. A binder according to claims 1 to 3, characterized in that the nitrogen base polyol is di- to pentafunctional.

5. A binder according to claims 1 to 4, characterized in that the nitrogen base polyol is present in mixture with a di- to pentafunctional nitrogen-free polyol.

6. A binder according to claims 1 to 5, characterized in that it contains as setting accelerator an alkali or alkaline earth acetate, in particular potassium acetate.

7. A binder according to claims 1 to 6, characterized in that it contains an organofunctional silane.

8. A binder according to claims 1 to 7, characterized in that it contains a solvent.

**Revendications**

1. Liant durcissant à froid pour solides particulaires, en particulier du sable de fonderie, à base d'un mélange d'un composé polyhydroxylé et d'un polyisocyanate, caractérisé en ce que le composé polyhydroxylé se compose au moins partiellement d'un polyol à base d'azote.

2. Liant selon la revendication 1, caractérisé en ce que le polyol à base d'azote possède un indice d'hydroxyle de 100 à 1800, en particulier de 200 à 800.

3. Liant selon les revendications 1 à 2, caractérisé en ce que le polyol à base d'azote est multifonctionnel.

4. Liant selon les revendications 1 à 3, caractérisé en ce que le polyol à base d'azote est bi- à pentafonctionnel.

5. Liant selon les revendications 1 à 4, caractérisé en ce que le polyol à base d'azote se présente en mélange avec un polyol sans azote bi- à pentafonctionnel.

6. Liant selon les revendications 1 à 5, caractérisé en ce qu'il contient en tant qu'accélérateur de durcissement un acétate d'alcalin ou d'alcalinoterreux, en particulier l'acétate de potassium.

7. Liant selon les revendications 1 à 6, caractérisé en ce qu'il contient un silane organofonctionnel.

8. Liant selon les revendications 1 à 7, caractérisé en ce qu'il contient un solvant.